# EUROPEAN PATENT SPECIFICATION

(11) **EP 0 816 718 B1**
(45) Date of publication and mention of the grant of the patent: **04.12.2002**
(21) Application number: 97109923.9
(22) Date of filing: 18.06.1997
(51) Int. Cl.: F16H 57/02

(54) **Use of a gearcase unit**
Verwendung einer Getriebegehäuseeinheit
Utilisation d'une unité de transmission

(30) Priority: 25.06.1996 IT MO960084
(43) Date of publication of application: 07.01.1998
(73) Proprietor: Rossi Motoriduttori S.p.A., 41100 Modena (IT)
(72) Inventor: Bavutti, Mario, 41012 Carpi (Prov. of Modena) (IT)
(74) Representative: Modiano, Guido, Dr.-Ing.

(56) References cited:
- EP-A- 0 617 214
- CH-A- 309 665
- CH-A- 445 240
- HANSEN: "EIN GELUNGENER VERSUCH DER ZAHNRADGETRIEBENORMUNG" ANTRIEBSTECHNIK., vol. 14, no. 6, June 1975, MAINZ DE, pages 338-342, XP002043483

## Description

The present invention relates to the use of a gearcase unit as a mechanical speed reduction unit, i.e., to a mechanical device for transmitting power constituted by coupled mechanical elements, for example shafts and gears, which is interposed between a motor, which is generally electric, and any user device to be driven at a reduced speed, or even at a higher speed, assuming more appropriately the name of "step-up or overgear unit" in the latter case; in any case, the moving mechanical elements, which constitute the reduction or step-up unit, are enclosed in a casing which rotationally supports at least the drive shaft and the driven shaft in mutual alignment or even the drive shaft arranged off-axis with respect to the driven shaft.

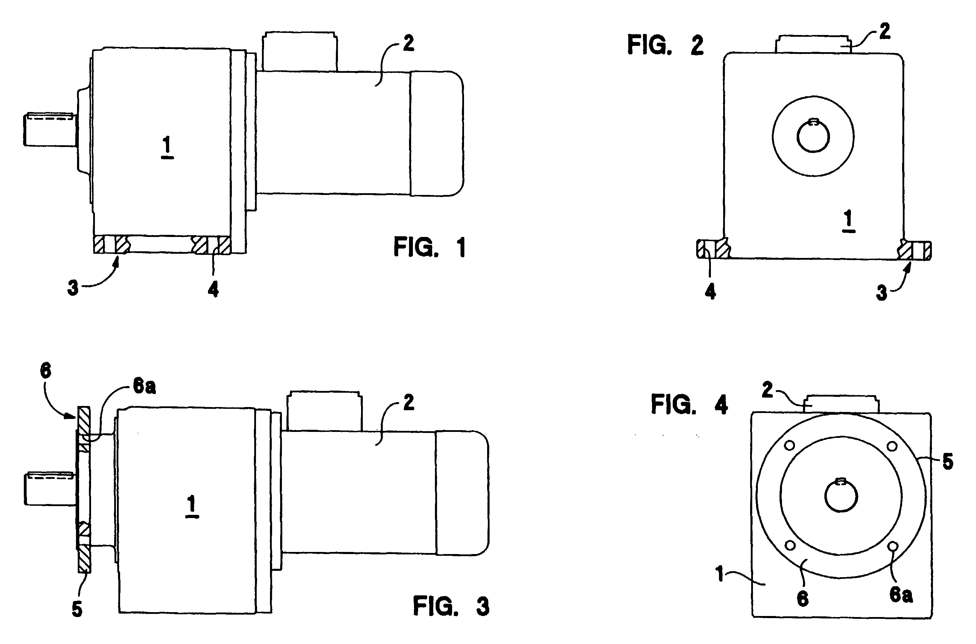

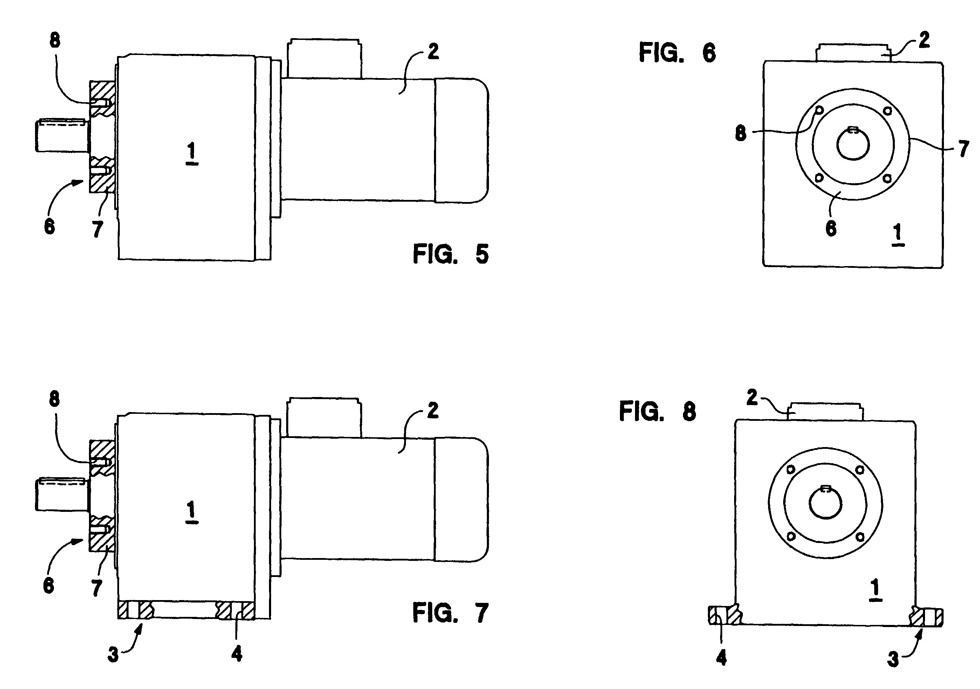

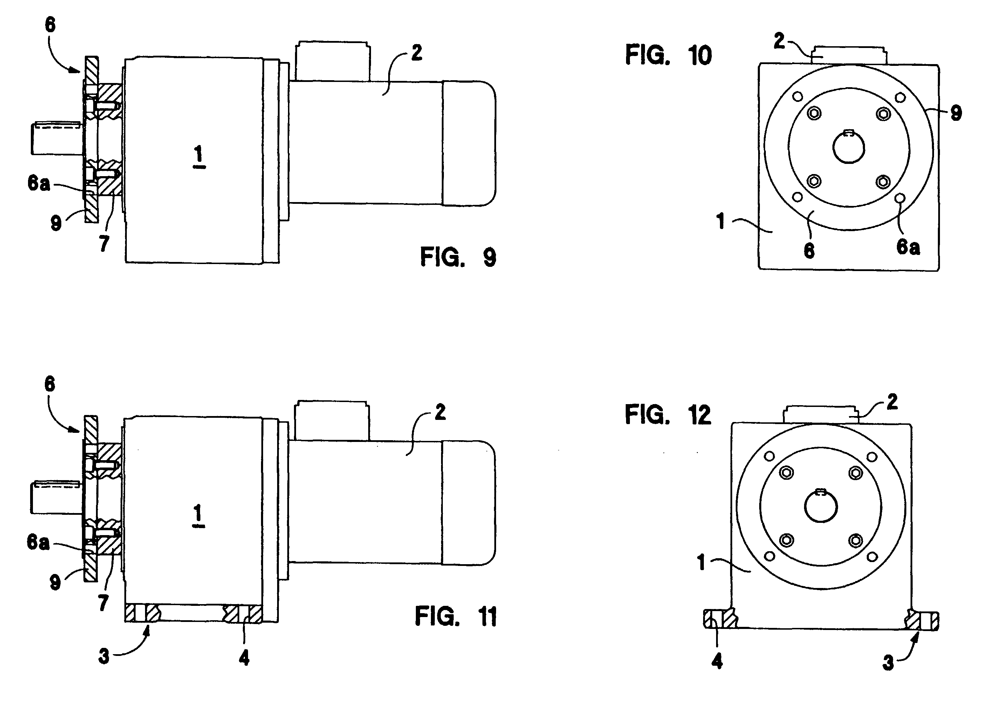

The state of the art comprises mechanical speed reduction and step-up units, hereinafter briefly referenced to as "reduction units", whose casing can be provided with:
-- a mounting surface which is parallel to the axis of the shaft (or shafts) and is constituted by a continuous or discontinuous base provided with holes for the passage of corresponding screws or bolts (version generally known as B3, as shown in figures 1 and 2);
-- a wall mounting surface which lies normal to the shaft axis and is constituted by a monolithic flange, with holes for the passage of corresponding screws or bolts inserted from the motor side or from the opposite side (monolithic version B5, as shown in figures 3 and 4);
-- a wall mounting surface which lies normal to the shaft axis and is constituted by a peripherally continuous or discontinuous flange with threaded holes for screwing therein screws which can be operated on from the opposite side with respect to the motor side (version B14, as shown in figures 5 and 6);
-- a continuous or discontinuous base mounting surface and a mounting surface which lies normal to the axis with a continuous or discontinuous flange provided with threaded holes (version B3/B14, as shown in figures 7 and 8);
-- a mounting surface which lies normal to the axis and is constituted by an applied flange provided with through holes (add-on version B5 as shown in figures 9 and 10);
-- a continuous or discontinuous base mounting surface and a mounting surface which lies normal to the axis on an applied flange with through holes (add-on version B3/B5, as shown in figures 11 and 12).

This state of the art, however, entails considerable drawbacks caused by the fact that a single reduction unit provided with one or two mounting surfaces as mentioned above cannot meet a plurality of different requirements for mounting it along surfaces which lie parallel or normal to the axis.

Accordingly, versions which allow a single kind of mounting (B3, B5) force one to purchase two different reduction units, whilst versions which allow two kinds of mounting, respectively (B3/B14) and (add-on B3/B5), are not satisfactory, since for example for type B3/B14 wall mounting requires accessibility of said wall on the opposite side with respect to the motor side, and this is often impossible and in any case more complicated, whilst for the add-on B3/B5 type it is necessary to assemble an additional flange.

Moreover, amidst the complexity of systems, it often happens that the reduction unit, in addition to the need to be mounted to a lower or wall support, must also be mounted to an upper support; since the reduction unit is not preset therefor, it would have to be turned upside down, with the consequent need to provide special lubrication means.

Finally, the reduction unit axis may sometimes have to assume different distances from the supporting surface: however, since this is not immediately feasible, it is necessary to provide for specific corrective structures.

It is understood that reduction units can also be coupled in vertical or otherwise inclined arrangements.

This prior state of the art is susceptible of considerable improvements as regards the possibility to eliminate the above drawbacks.

The use of a gearcase with the features comprised in the preamble of claim 1, is known from the document CH-A-309665.

The above description first of all clearly shows the need to solve the technical problem of finding a reduction unit which can be coupled to any electric or non-electric motor and can meet new installation requirements for coupling to supporting surfaces, i.e., immediate adaptability for mounting to an upper support, and advantageously simultaneously meets at least two of the following requirements:
-- mounting on an upper support;
-- mounting on a front wall;
-- mounting on a lower support;
as regards adaptability for simultaneous mounting on lower and upper supports, since it is necessary to meet the most disparate overall size requirements according to the kind of motor associated with the reduction unit and according to the space available in the supporting structure, another aspect of the same problem is to mount the reduction unit on a surface, for example an upper surface, despite the presence of the terminal strip which protrudes from the electric motor on the same side or of protrusions, in general, of other kinds of motors.

The invention solves the above problem by the features of claim 1.

The advantages achieved by the present invention are: as regards the adoption of an additional mounting surface which is parallel to the axis, advantageously in opposition with respect to the conventional one, the possibility to immediately choose between lower mounting and upper mounting, both with equal distances between the two mounting surfaces and the axis and with different distances; said axis being able to assume the smallest or greatest of the distances from the mounting surface of the reduction unit-user machine assembly; as regards the adoption of the front mounting surface, the possibility, together with provisions for mounting along at least one surface which is parallel to the axis, to allow insertion of the mounting means both from the motor side and from the other side; another advantage being constituted by the possibility to neutralize the bulk of the terminal strip of the electric motor (or other equivalent protrusion of a non-electric motor) to mount the reduction unit on the same side; this by arranging the coupling of the reduction unit which has the greatest distance between the mounting surface and the axis on the same side as said terminal strip or protrusion.

Some embodiments of the invention are illustrated, merely by way of example, in the enclosed nine drawings, wherein:
figures 1, 2, 3, 4, 5, 6, 7, 8, 9, 10, 11 and 12 are pairs of partially sectional side views and left views, respectively, of reduction unit types B3, monolithic B5,B14, B3/B14, add-on B5, add-on B3/B5, which constitute the state of the art, coupled to an electric motor;
figures 13 and 14 are, respectively, a partially sectional side view and left view of a reduction unit provided with mounting means constituted by the combination of a lower mounting surface with a discontinuous base and of a front mounting surface with a monolithic flange, in which advantageously, appropriate recess structures are used, in order to reduce bulk - also in relation to the distribution of the internal components - in the regions for the insertion of mounting screws or bolts;
figures 15 and 16 are partially sectional views of a reduction unit provided with mounting means constituted by the combination of the monolithic-flange front mounting and of the upper mounting surface;
figures 17 and 18 are views of a reduction unit provided with mounting means constituted by upper and lower mounting surfaces which are equidistant from the axis of the driving and driven shafts by a suitable extent, designated, for example, by the reference capital letter A;
figures 19 and 20 are views of a reduction unit which is similar to the one of figures 17 and 18 but with a different distance of the mounting surfaces with respect to the axis, in which B is smaller than A;
figures 21 and 22 are views of a reduction unit with three mounting surfaces: a lower one and an upper one which are equidistant and a front one constituted by a flange provided with threaded holes;
figures 23 and 24 are views of a reduction unit such as the one of figures 21 and 22, but with lower and upper mounting surfaces which are not equidistant with respect to the axis;
figures 25 and 26 are views of a reduction unit which is similar to the one of figures 21 and 22, but with an applied flange provided with through holes;
figures 27 and 28 are similar to figures 23 and 24, but illustrate an applied flange with through holes;
figures 29 and 30 are views of a reduction unit which is similar to the one of figures 25 and 26, but with a monolithic flange provided with through holes;
figures 31 and 32 are views of a reduction unit which is advantageous with respect to the one of figures 27 and 28, owing to the introduction of a monolithic flange with through holes;
figure 33 is a side view of an application by bottom mounting of the reduction unit of figures 31 and 32, both by means of screws and by means of bolts;
figure 34 is a side view of the application of the same reduction unit as in figure 33, with a smaller lower axis height (B), bottom mounting, and bulk of the terminal strip of the motor 2 accommodated within the space occupied by the reduction unit 1, in accordance with the present invention;
figure 35 is a side view for the application of said reduction unit by front wall mounting, with the possibility to use screws or bolts both on the motor side and on the opposite side.

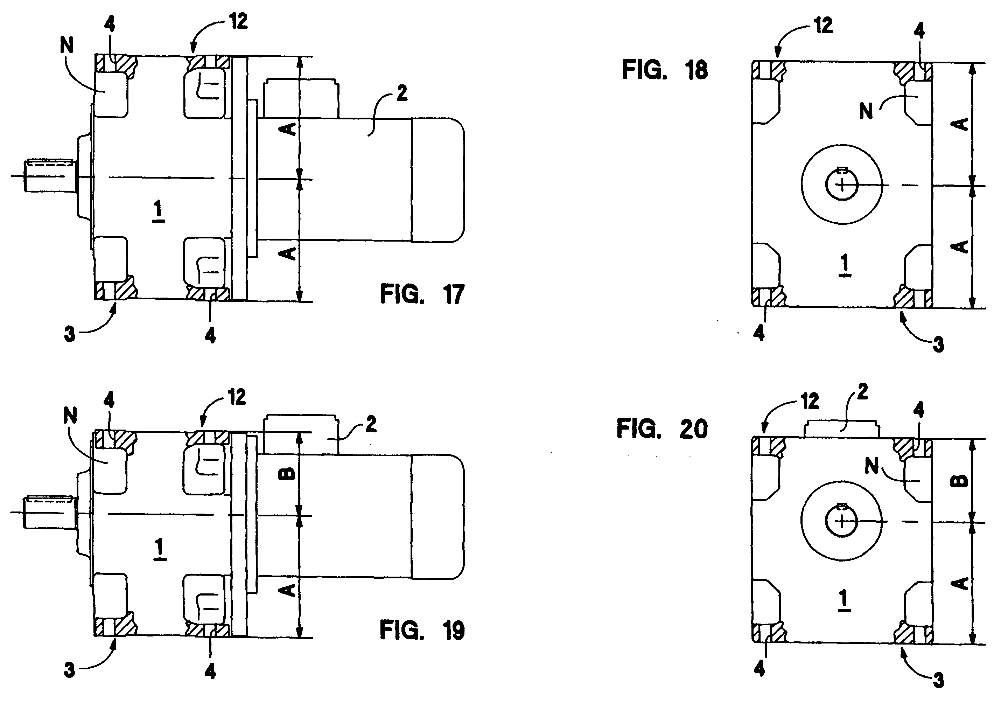

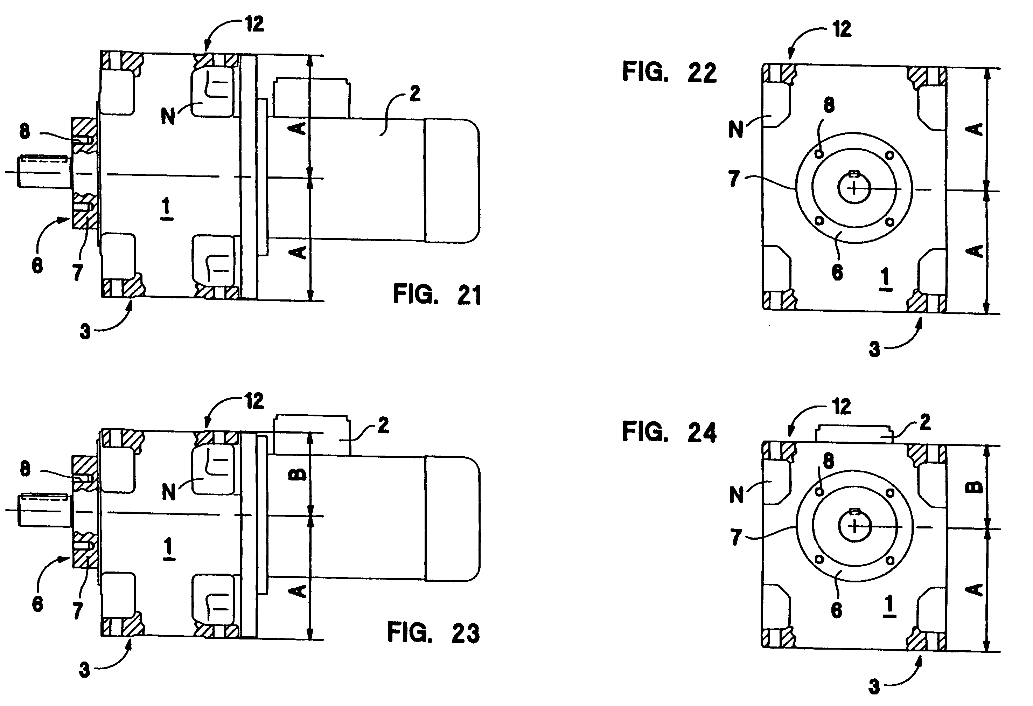

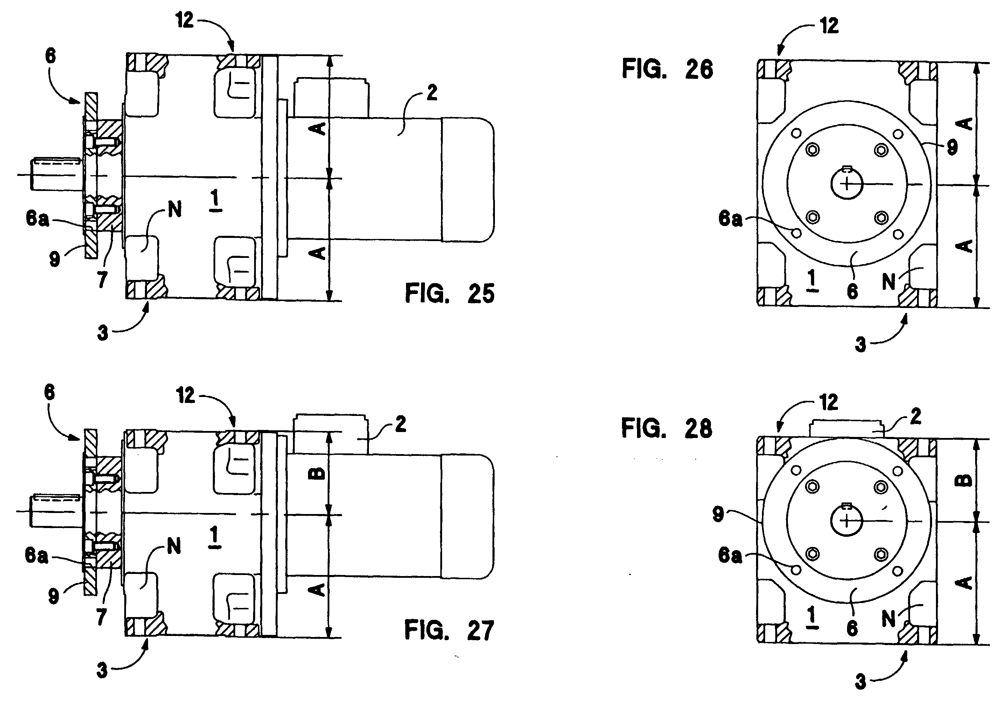

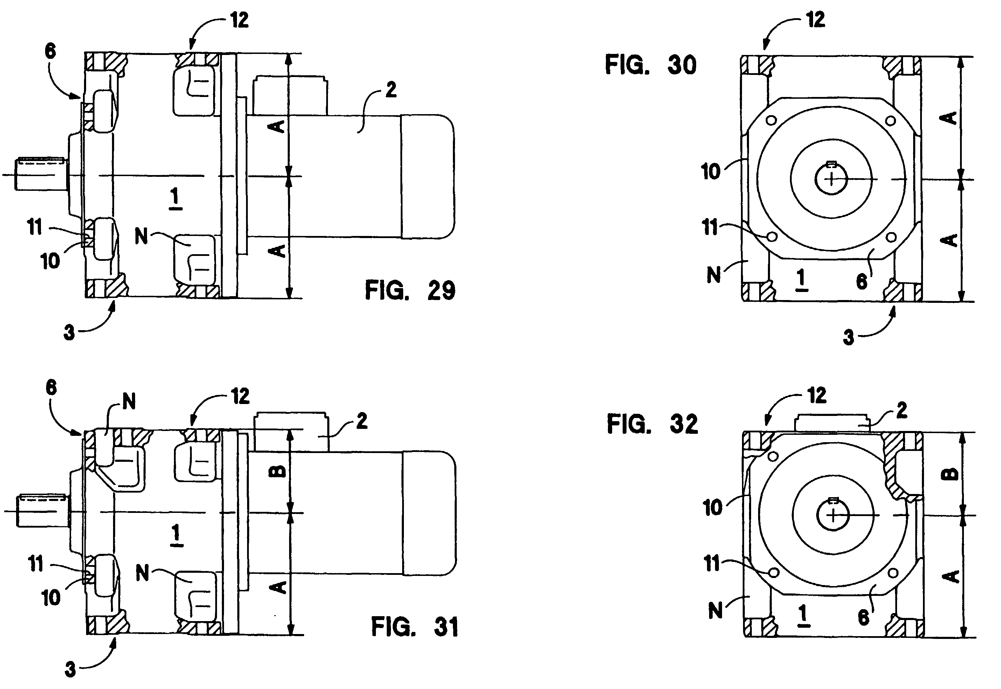

Figures 1-33 and 35 show uses of a reduction unit which are not part of the invention.

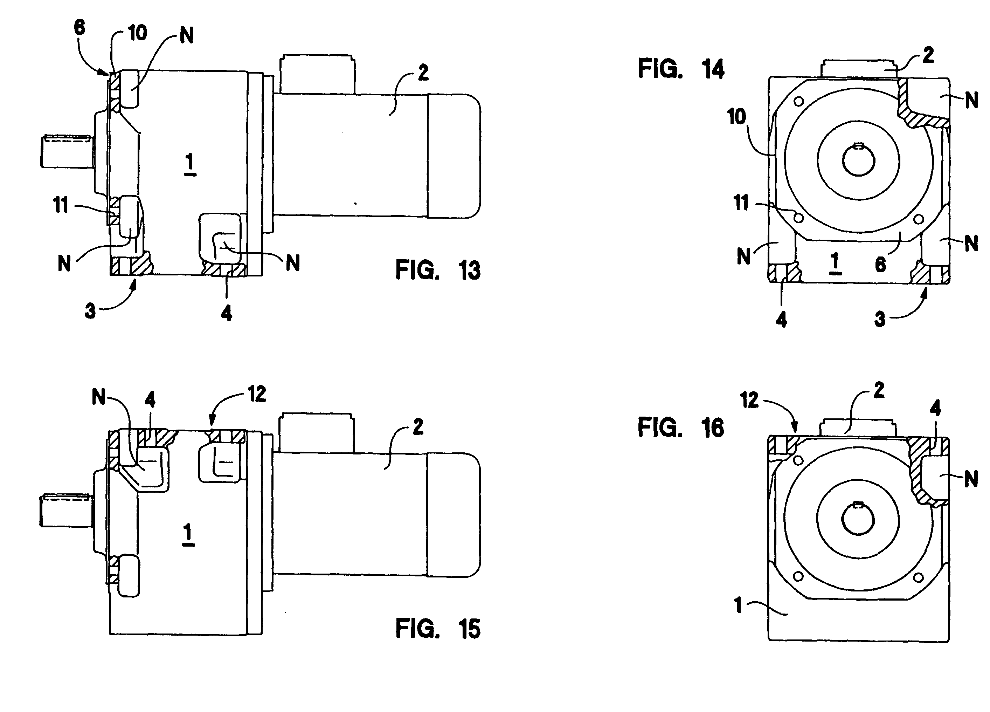

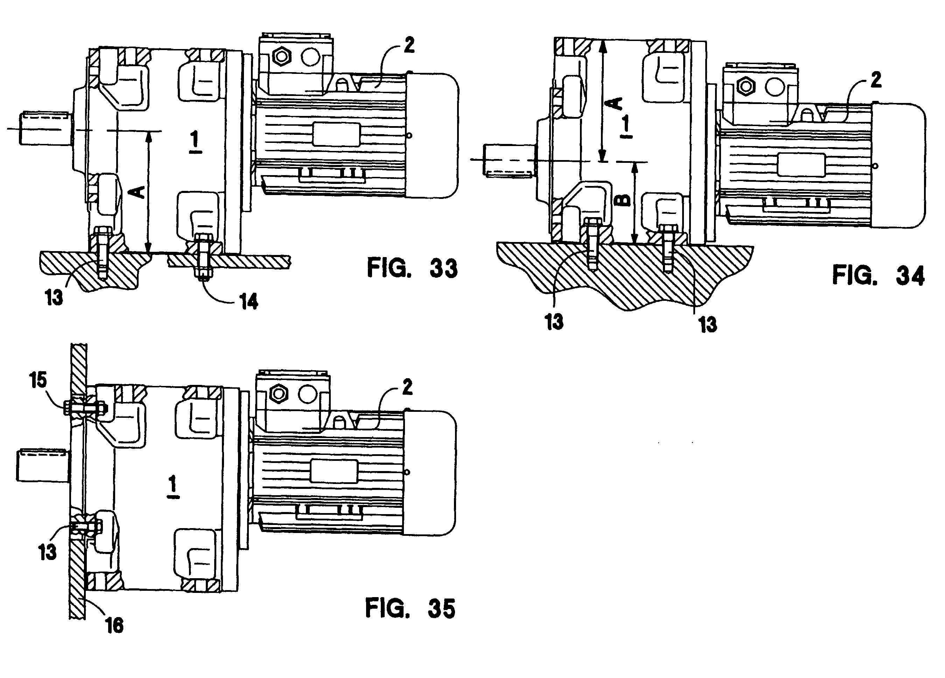

The reference numeral 1 designates the reduction unit coupled to a generic electric motor 2, with an upper terminal strip; the reference numeral 3 designates the lower mounting surface, provided with through holes 4; the reference numeral 5 (figure 3) designates a monolithic flange provided with a front mounting surface (6) with through holes 6a; the reference numeral 7 (figure 5) designates a flange with threaded holes 8; the reference numeral 9 (figure 9) designates an applied flange, with through holes 6a; the reference numeral 10 (figure 13) designates a monolithic flange with through holes 11 and corresponding recesses N for the insertion and operation of screws or nuts; the reference numeral 12 designates the upper mounting surface, provided with through holes 4; the reference numeral 13 (figures 33, 34 and 35) designates mounting screws; the reference numeral 14 designates a mounting bolt; the reference numeral 15 designates a mounting bolt with insertion in the wall 16 from the side lying opposite to the side of the motor 2.

In practical execution, the materials, the dimensions and the constructive details may be different from those described, without thereby abandoning the scope of the present invention.

Accordingly, the mounting elements related to the upper mounting surface and to the lower mounting surface might be constituted by applied plates which are fixed to the casing by means of screws and are provided with through holes.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Use of a gearcase unit for connecting a motor (2) having a protrusion to a user device, either in a step-up or in a step-down configuration, the gearcase comprising a casing which encloses the elements for transmitting motion so as to reduce or increase the speed, and drive and driven shafts having aligned or otherwise parallel axes, a first one of said shafts being the input shaft connectable to the motor (2) and the second one the output shaft connectable to the user device, said casing being provided with a continuous or discontinuous surface for front mounting (6) through screws (13), bolts (14, 15) or other mounting means, which lies normal to said shaft axes, with a continuous or discontinuous lower mounting surface (3), which can be crossed by mounting means selected from a group constituted by screws (13), bolts (14, 15) or other mounting means, and with an upper mounting surface (12) of any adapted configuration, which can be crossed by mounting means selected within a group which comprises screws (13), bolts (14, 15) or other mounting means, said upper and lower surfaces (3, 12) being parallel to said shaft axes, and **characterised in that** said front mounting surface (6) is constituted by a flange (7, 9, 10), with a circular contact surface and mounting through or threaded holes (6a, 8, 11) for insertion of said screws or bolts (13, 14, 15), said contact surface and mounting through or threaded holes being arranged concentrically with respect to the axis of the output shaft the use comprising arranging the one of said upper and lower surfaces (3,12) of said gearcase unit which is at the greatest distance from the axis of said shafts, on the same side as said protrusion of said motor (2) so that the bulk of the protrusion of said motor (2) is accommodated within the space occupied by the gearcase unit.

2. A use according to claim 1, wherein the gearcase unit has the said flange (7) constituting said front mounting surface (6) provided with threaded holes (8).

3. A use according to claim 2, wherein the gearcase unit comprises a further mounting flange (9) with mounting through holes (6a) which is applied at said flange (7).

4. A use according to claim 1, wherein the gearcase unit has said flange (10), constituting said front mounting surface (6), formed monolithic with said casing and provided with mounting through holes (11).

5. A use according to claims 1 or 4, wherein the gearcase unit comprises the front mounting surface (6) associated with both said upper mounting surface (12) and said lower mounting surface (3), all provided with through mounting holes (6a, 11).

6. A use according to any of the claims 1 or 5, wherein the gearcase unit has the distance (A) between the shaft axes and the upper mounting surface (12) which is greater than the distance to the lower mounting surface (B), the gearcase unit being arranged for mounting at the lower mounting surface (3), the motor (2) being coupled thereto with a 180° offset.

7. A use according to one or more of the preceding claims, wherein said gearcase unit has said upper (12) and lower (3) mounting surfaces provided with through holes (4) which can be crossed by said mounting means (13, 14, 15) and with corresponding recesses (N) located in the walls of the casing so as to allow insertion and/or operation of said mounting means (13, 14, 15) from the side opposite to the mounting surfaces.

8. A use according to claim 7, wherein the gearcase unit has said front mounting surface (6) provided with recesses (N) which are located in corresponding relationship with said mounting through holes (11).

## Patentansprüche

1. Verwendung einer Getriebegehäuseeinheit zum Ankuppeln eines Motors (2), mit einem Vorsprung zu einer Anwendervorrichtung, entweder in Übersetzungs- oder in Untersetzungsanordnung, wobei das Getriebegehäuse einen Gehäuseteil aufweist, das die Elemente zur Übertragung einer Bewegung zum Reduzieren oder Erhöhen der Geschwindigkeit aufnimmt, und antreibende und angetriebene Wellen besitzt, die fluchtende oder in anderer Weise parallele Achsen besitzen, wobei eine erste dieser Wellen die mit dem Motor (2) verbindbare Eingangswelle und die zweite die mit der Anwendervorrichtung verbindbare Ausgangswelle ist, wobei das Gehäuseteil mit einer kontinuierlichen oder diskontinuierlichen Fläche (6) zur stirnseitigen Befestigung mittels Schrauben (13), Bolzen (14, 15) oder andere Befestigungsmittel versehen ist, die senkrecht zu den Achsen liegt, mit einer kontinuierlichen oder diskontinuierlichen unteren Montagefläche (3), die von Montagemitteln durchdrungen werden können, die aus einer Gruppe ausgewählt sind, die durch Schrauben (13), Bolzen (14, 15) oder andere Montagemittel enthält, und mit einer oberen Montagefläche (12) beliebiger angepasster Konfiguration, die von Montagemitteln durchdrungen werden können, die aus einer Gruppe ausgewählt sind, die Schrauben (13), Bolzen (14, 15) oder andere Montagemittel enthält, wobei die obere und untere Fläche (3, 12) parallel zu den Wellenachsen sind, **dadurch gekennzeichnet, dass** die stimseitigen Montagefläche (6) durch einen Flansch (7, 9, 10) gebildet ist, der mit einer kreisrunden Kontaktfläche und Befestigungsdurchgangs- oder -gewindebohrungen (6a, 8, 11) zum Einsetzen der Schrauben oder Bolzen (13, 14, 15) versehen ist, wobei die Kontaktfläche und die Montagedurchgangs- oder -gewindebohrungen konzentrisch zur Achse der Ausgangswelle angeordnet sind, und dass die Verwendung das Anordnen der einen der oberen und unteren Flächen (3, 12) der Getriebegehäuseeinheit beinhaltet, die im größten Abstand von der Achse der Wellen auf derselben Seite wie der Vorsprung des Motors (2) ist, so dass die Größe des Vorsprungs des Motors (2) innerhalb des von der Getriebegehäuseeinheit eingenommenen Raumes angepasst ist.

2. Verwendung nach Anspruch 1, **dadurch gekennzeichnet, dass** bei der Getriebegehäuseeinheit der Flansch (7) die stirnseitige Montagefläche (6), die mit Gewindebohrungen (8) versehen ist, bildet.

3. Verwendung nach Anspruch 2, **dadurch gekennzeichnet, dass** die Getriebegehäuseeinheit einen weiteren Montageflansch (9) mit Montagedurchgangsbohrungen (6a), die an diesem Flansch (7) vorgesehen sind, besitzt.

4. Verwendung nach Anspruch 1, **dadurch gekennzeichnet, dass** bei der Getriebegehäuseeinheit der Flansch (10), der die stirnseitige Montagefläche (6) bildet, mit dem Gehäuseteil monolithisch geformt ist und mit Montagedurchgangsbohrungen (11) versehen ist.

5. Verwendung nach Anspruch 1 oder 4, **dadurch gekennzeichnet, dass** die Getriebegehäuseeinheit die stirnseitige Montagefläche (6) besitzt, die sowohl der oberen Montagefläche (12) als auch der unteren Montagefläche (3) zugeordnet ist, die sämtlich mit Durchgangsmontagebohrungen (6a, 11) versehen sind.

6. Verwendung nach einem der Ansprüche 1 oder 5, **dadurch gekennzeichnet, dass** die Getriebegehäuseeinheit einen Abstand (A) zwischen den Wellenachsen und der oberen Montagefläche (12) besitzt, der größer ist als der Abstand zur unteren Montagefläche (B), wobei die Getriebegehäuseeinheit zur Montage an der unteren Montagefläche (3) angeordnet und der Motor (2) mit einem 180°-Versatz daran angekuppelt ist.

7. Verwendung nach einem oder mehreren der vorhergehenden Ansprüche, **dadurch gekennzeichnet, dass** die Getriebegehäuseeinheit die obere (12) und untere (3) Montageflächen besitzt, die mit Durchgangsbohrungen (4), die von den Montagemitteln (13, 14, 15) durchdrungen werden können, und mit entsprechenden Rücksprüngen (N), die in den Wänden des Gehäuseteils angeordnet sind, versehen sind, um so ein Einsetzen und/oder Betätigen der Montagemittel (13, 14, 15) von der den Montageflächen abgewandten Seite zu ermöglichen.

8. Verwendung nach Anspruch 7, **dadurch gekennzeichnet, dass** bei der Getriebegehäuseeinheit die stirnseitige Montagefläche (6) mit Rücksprüngen (N) versehen ist, die in entsprechender relativer Anordnung zu den Montagedurchgangsbohrungen (11) angeordnet sind.

## Revendications

1. Utilisation d'une unité de transmission pour connecter un moteur (2) comportant une partie en saillie à un dispositif utilisateur, dans une configuration d'élévation de vitesse ou de réduction de vitesse, la transmission comprenant un carter qui entoure les éléments de transmission de mouvement pour réduire ou augmenter la vitesse, et des arbres d'entraînement et entraîné ayant des axes alignés ou parallèles d'une autre façon, un premier des dits arbres étant l'arbre d'entrée connectable au moteur (2) et le deuxième étant l'arbre de sortie connectable au dispositif utilisateur, le dit carter présentant une surface continue ou discontinue (6) pour montage frontal au moyen de vis (13), de boulons (14, 15) ou d'autres éléments de montage, qui est perpendiculaire aux dits axes des arbres, une surface de montage inférieure continue ou discontinue (3) qui peut être croisée par des éléments de montage choisis dans un groupe comprenant des vis (13), des boulons (14, 15) ou d'autres éléments de montage, et une surface de montage supérieure (12) de toute configuration adaptée, qui peut être croisée par de moyens de montage choisis dans un groupe comprenant des vis (13), des boulons (14, 15) ou d'autres éléments de montage, les dites surfaces supérieure et inférieure (3, 12) étant parallèles aux dits axes des arbres. **caractérisée en ce que** la dite surface de montage frontale (6) est constituée par une bride (7, 9, 10), avec une surface de contact circulaire et des trous de montage traversants ou des trous taraudés (6a, 8, 11) pour insertion des dites vis ou des dits boulons (13, 14, 15), la dite surface de contact et les trous traversants ou taraudés étant agencés concentriquement par rapport à l'axe de l'arbre de sortie, l'utilisation comprenant l'agencement de celle des dites surfaces supérieure et inférieure (3, 12) de la dite unité de transmission qui est à la plus grande distance de l'axe des dits arbres sur le même côté que la dite saillie du dit moteur (2), de sorte que le volume de la saillie du dit moteur (2) se loge dans l'espace occupé par l'unité de transmission.

2. Utilisation selon la revendication 1, dans laquelle la dite bride (7) de l'unité de transmission constituant la dite surface de montage frontale (6) comporte des trous taraudés (8).

3. Utilisation selon la revendication 2, dans laquelle l'unité de transmission comprend une autre bride de montage (9) comportant des trous de montage traversants (6a), qui est appliquée à la dite bride (7).

4. Utilisation selon la revendication 1, dans laquelle la dite bride (10) de l'unité de transmission, constituant la dite surface de montage frontale (6), est formée solidairement avec le dit carter et comporte des trous de montage traversants (11).

5. Utilisation selon les revendications 1 ou 4, dans laquelle la surface de montage frontale (6) de l'unité de transmission est associée à la fois à la dite surface de montage supérieure (12) et à la dite surface de montage inférieure (3), et elles comportent toutes des trous de montage traversants (6a, 11).

6. Utilisation selon une quelconque des revendications 1 ou 5, dans laquelle la distance (A) entre les axes des arbres et la surface de montage supérieure (12) de l'unité de transmission est plus grande que la distance entre les dits axes et la surface de montage inférieure, l'unité de transmission étant disposée pour montage à l'endroit de la surface de montage inférieure (3), le moteur (2) étant accouplé à la dite unité avec un décalage de 180 degrés.

7. Utilisation selon une ou plusieurs des revendications précédentes, dans laquelle les dites surfaces de montage supérieure (12) et inférieure (3) de la dite unité de transmission comportent des trous traversants (4) et peuvent être croisées par les dits éléments de montage (13, 14, 15), et des évidements correspondants (N) ménagés dans les parois du carter afin de permettre l'insertion et/ou la manoeuvre des dits éléments de montage (13, 14, 15) à partir du côté opposé aux surfaces de montage.

8. Utilisation selon la revendication 7, dans laquelle la dite surface de montage frontale (6) de l'unité de transmission comporte des évidements (N) qui sont situés en correspondance des dits trous de montage traversants (11).
